# EUROPÄISCHE PATENTSCHRIFT

(11) **EP 1 380 770 B1**
(45) Veröffentlichungstag und Bekanntmachung des Hinweises auf die Patenterteilung: **14.07.2010**
(21) Anmeldenummer: 03010080.4
(22) Anmeldetag: 03.05.2003
(51) Int. Cl.: F16H 37/08

(54) **Geschwindigkeits-Wechselgetriebe**
Gearbox
Boîte de vitesses

(30) Priorität: 12.07.2002 DE 10231516
(43) Veröffentlichungstag der Anmeldung: 14.01.2004
(73) Patentinhaber: AUDI AG, 85045 Ingolstadt (DE)
(72) Erfinder: Märkl, Johann, 85128 Nassenfels (DE); Schenker, Mario, 85049 Ingolstadt (DE); Meixner, Christian, 85049 Ingolstadt (DE)

(56) Entgegenhaltungen:
- EP-A1- 0 245 079
- EP-B1- 0 147 646
- EP-B1- 0 956 467
- WO-A-96/35063
- GB-A- 2 115 091

## Beschreibung

Die Erfindung betrifft ein Geschwindigkeits-Wechselgetriebe, insbesondere für Kraftfahrzeuge, gemäß dem Oberbegriff des Patentanspruches 1.

Bekannt sind Geschwindigkeits-Wechselgetriebe, insbesondere für Kraftfahrzeuge, mit einem stufenlosen Wandler, beispielsweise einem Toroidgetriebe oder einem Umschlingungsgetriebe mit einer Kette oder einem Schubgliederband. Die Leistungsübertragung derartiger Getriebe ist jedoch funktionsbedingt (Reibschluss) begrenzt. Es sind auch schon Vorschläge (EP 956 467) bekannt, solche Geschwindigkeits-Wechselgetriebe mit Leistungsverzweigungsgetriebe zu kombinieren, der bauliche und fertigungstechnische Mehraufwand ist jedoch beträchtlich.

Aus der gattungsbildenden EP 0 245 079 A1 ist bereits ein Geschwindigkeits-Wechselgetriebe für Kraftfahrzeuge mit einer Antriebswelle, einer Abtriebswelle, einem stufenlosen Wandler und einem Leistungsverzweigungsgetriebe bekannt. Das Leistungsverzweigungsgetriebe ist dem Wandler nachgeschaltet und im Kraftfluss zwischen Wandler und Leistungsverzweigungsgetriebe ist eine Kupplung und eine triebliche Verbindung mit einer Hohlwelle eingeschaltet. Das Leistungsverzweigungsgetriebe ist durch zwei trieblich miteinander gekoppelte Planetenradsätze gebildet, so dass der leistungsverzweigte Betrieb im oberen Übersetzungsbereich möglich ist.

Konkret ist ein derartiges Geschwindigkeits-Wechselgetriebe in Fig. 16 dieser Druckschrift gezeigt, wobei die beiden Planetenradsätze so angeordnet sind, dass eine Abtriebswelle des unteren Scheibensatzes des Wandlers mit dem Sonnenrad des ersten Pianetenradsatzes und dem Hohlrad bzw. Außenrad des zweiten Planetenradsatzes verbunden ist, während das Außenrad des ersten Planetenradsatzes und der Träger des zweiten Planetenradsatzes miteinander verbunden sind. Der Träger des ersten Planetenradsatzes und das Sonnenrad des zweiten Planetenradsatzes sind einerseits mit einem Bremselement und andererseits mit einer Übertragungseinheit verbunden.

Aufgabe der Erfindung ist es, ein Geschwindigkeits-Wechselgetriebes der gattungsgemäßen Art vorzuschlagen, welches baulich und fertigungstechnisch besonders günstig und ggf. für einen Allradantrieb besonders geeignet ist.

Diese Aufgabe wird mit den Merkmalen des Patentanspruchs 1 gelöst. Vorteilhafte Weiterbildungen der Erfindung beschreiben die weiteren Patentansprüche.

Es wird vorgeschlagen, das Leistungsverzweigungsgetriebe durch zwei trieblich miteinander gekoppelte Planetenradsätze zu bilden und die Hohlwelle mit dem Sonnenrad des ersten Planetenradsatzes zu verbinden. Dies ergibt eine baulich gedrängte und besonders robuste Getriebekonstruktion, die zudem die Realisierung günstiger Übersetzungsverhältnisse ermöglicht.

Des weiteren kann der Planetenradträger des ersten Planetenradsatzes starr mit dem Außenrad des zweiten Planetenradsatzes verbunden sein und mit einem ersten Bremselement zusammenwirken, während der Planetenradträger des zweiten Planetenradsatzes mit dem Außenrad des ersten Planetenradsatzes starr verbunden ist und unmittelbar auf die Abtriebswelle wirkt, und schließlich das Sonnenrad des zweiten Planetenradsatzes auf der Abtriebswelle gelagert ist und mit einem zweiten Bremselement zusammenwirkt.

Es besteht auch die Möglichkeit, dass beide Planetenradsätze mit glei cher Verzahnung ausgebildet sind.

Zur Bereitstellung eines Allradantriebes mit zwei Abtrieben kann bevor zugt dem Leistungsverzweigungsgetriebe ein Längsdifferenzial für den Antrieb einer Vorderachse und einer Hinterachse des Kraftfahrzeuges nachgeschaltet sein. Ferner kann baulich vorteilhaft das Längsdifferen zial über ein Vorgelege von der Abtriebswelle angetrieben und die eine Achs-Antriebswelle durch das eine Zahnrad des Vorgeleges hindurch verlaufen. Dabei kann dann die besagte Achs-Antriebswelle über ein weiteres Vorgelege mit einer Antriebswelle der Vorderachse trieblich verbunden sein. Daraus resultiert eine baulich gedrängte Konstruktion, die räumlich günstig in Kraftfahrzeuge integrierbar ist.

Schließlich kann der stufenlose Wandler beispielsweise ein Umschlingungswandler sein, dessen Scheibensätze auf der Antriebswelle und einer dazu parallelen Nebenwelle angeordnet sind, wobei die Neben welle andererseits ein weiteres Zahnrad des Zahnradtriebes trägt. Der stufenlose Wandler könnte aber auch ein Toroid- oder Kegel/Ring-Wandler sein.

Ein Ausführungsbeispiel der Erfindung ist im Folgenden mit weiteren Einzelheiten näher beschrieben.

Die anliegende schematische Zeichnung zeigt in:
- Fig. 1: ein Geschwindigkeits-Wechselgetriebe für Kraftfahrzeuge mit Allradantrieb mit einem Umschlingungswandler und einem Leis- tungsverzweigungsgetriebe; und
- Fig. 2: eine Grafik der Wandlerübersetzung i_{W} über der Gesamtgetriebeübersetzung i_{G}.

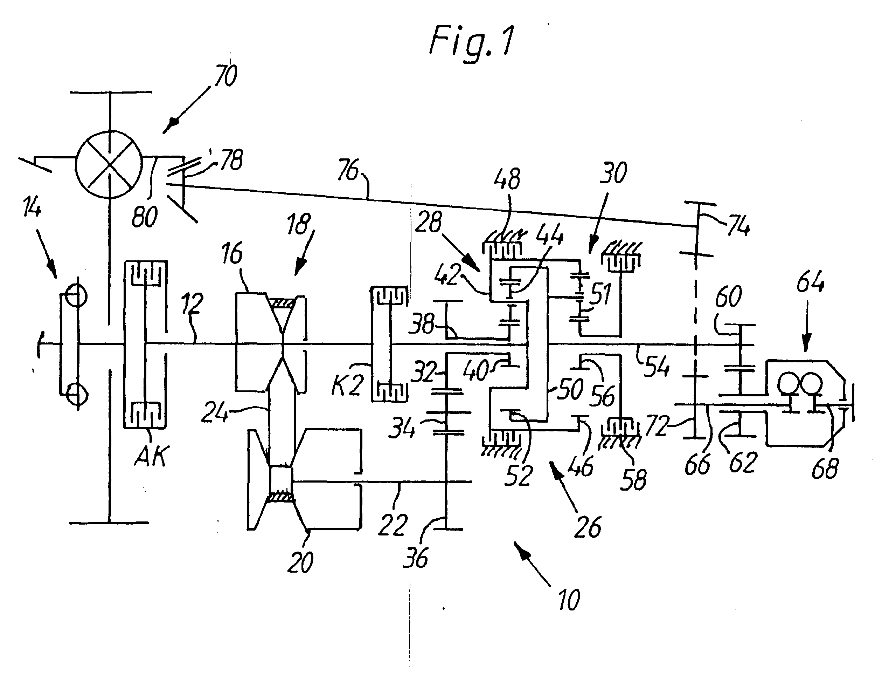

In der Fig. 1 ist mit 10 ein Geschwindigkeits-Wechselgetriebe schema tisch dargestellt, wobei die Getriebewellen entsprechend in einem nicht dargestelltem Getriebegehäuse drehbar gelagert sind.

Das Wechselgetriebe 10 weist eine Antriebswelle 12 auf, die über ein Zweimassenschwungrad 14 und eine Anfahr-Reibungskupplung AK von einer nicht dargestellten Brennkraftmaschine des Kraftfahrzeuges antreibbar ist.

Auf der Antriebswelle 12 sitzt ein erstes Scheibenpaar 16 eines Um schlingungswandlers 18, dessen zweites Scheibenpaar 20 auf einer parallel zur Antriebswelle 12 liegenden Nebenwelle 22 angeordnet ist. Die stufenlose Übersetzung des Umschlingungswandlers 18 wird durch entsprechendes hydraulisch gesteuertes Auseinander- bzw. Zusammenfahren der Scheibenhälften der Scheibenpaare 16, 20 eingestellt, wobei die zwischen den Scheibenpaaren laufende Kette 24 ihre Umschlingungsradien entsprechend verändert.

Die Antriebswelle 12 ist mit einer Lamellenkupplung K2 unterteilt, wobei die Lamellenkupplung K2 zwischen dem Scheibenpaar 16 des Umschlingungswandlers 18 und einem nachgeschaltetem Leistungsverzweigungsgetriebe 26 positioniert ist. Das Leistungsverzweigungsge triebe 26 setzt sich aus zwei Planetenradsätzen 28, 30 zusammen.

Ferner ist zwischen der Nebenwelle 22 und der Antriebswelle 12 im Kraftfluss hinter der Lamellenkupplung K2 eine triebliche Verbindung in Form eines Zahnradsatzes mit den Zahnrädern 32, 34 und einem Zwischenrad 36 angeordnet, die über eine Hohlwelle 38 auf der Antriebs welle 12 mit dem Sonnenrad 40 des ersten Planetenradsatzes 28 ver bunden ist.

Das erste Scheibenpaar 16 kann auch auf einer zur Antriebswelle 12 parallelen Welle angeordnet sein, wobei dann das Zahnrad 34 entfällt. Die Antriebswelle 12 ist dann vorteilhafterweise zwischen den Scheibensätzen 16 und 20 und deren Umschlingungsmittel 24 zu platzieren.

Die Planetenradsätze 28, 30 des Leistungsverzweigungsgetriebes 26 sind im übrigen wie folgt trieblich miteinander gekoppelt:

Der Planetenradträger 42 des ersten Planetenradsatzes 28 mit ent sprechenden Planetenrädern 44 ist starr mit dem innenverzahnten Au ßenrad 46 des zweiten Planetenradsatzes 30 verbunden und wirkt mit einem ersten Bremselement bzw. einer Lamellenbremse 48 zusam men.

Des weiteren ist der Planetenradträger 50 des zweiten Planetenradsat zes 30 mit dem innenverzahnten Außenrad 52 des ersten Planetenrad satzes 28 starr verbunden und sitzt unmittelbar auf der Abtriebswelle 54 des Wechselgetriebes 10, wobei der Verzahnungseingriff mit dem Außenrad 46 und dem Sonnenrad 56 in bekannter Weise durch die am Planetenradträger drehbar gelagerten Planetenräder 51 sichergestellt ist.

Ferner ist das Sonnenrad 56 des zweiten Planetenradsatzes 30 auf der Abtriebswelle 54 drehbar gelagert und wirkt mit einem zweiten Brems element bzw. einer zweiten Lamellenbremse 58 zusammen.

Über die Lamellenbremsen 48, 58 können die entsprechenden Getrie beelemente der Planetenradsätze 28, 30 gebremst oder festgesetzt werden, wobei die Lamellenbremsen 48, 58 jeweils in bekannter Weise im nicht dargestellten Getriebegehäuse des Wechselgetriebes 10 an geordnet und hydraulisch beaufschlagbar sind.

Die Lamellenbremsen könnten auch als Anfahrkupplung ausgebildet sein, so dass dann die ursprüngliche Anfahrkupplung AK entfallen könnte.

Die Abtriebswelle 54 treibt über ein Vorgelege mit den Zahnrädern 60, 62 ein Längsdifferenzial 64, z.B. ein Torsendifferenzial an, dessen Achs-Antriebswellen 66, 68 für den Antrieb einer Vorderachse 70 und einer Hinterachse (nicht dargestellt) des Kraftfahrzeuges dienen.

Dabei verläuft die Achs-Antriebswelle 66 des Differenziales 64 durch das Zahnrad 62 des besagten Vorgeleges hindurch und trägt ein weite res Kegel-Zahnrad 72, das mit einem Zahnrad 74 ein weiteres Vorge lege bildend mit einer Antriebswelle 76 zusammenwirkt. Die Antriebs welle 76 schließlich treibt über ein Antriebsritzel 78 das Tellerrad 80 des Vorderachsdifferenziales 70 an.

Die beschriebene Getriebeanordnung ermöglicht durch Festbremsen der Lamellenbremse 48 die Verwirklichung eines Rückwärtsganges, wobei der Kraftfluss über den Umschlingungswandler 18, den Zahn radtrieb mit den Zahnrädern 32, 34, 36 und über des Hohlrad 40 des ersten Planetenradsatzes 28 auf den Planetenradträger 50 des zweiten Planetenradsatzes 30 und schließlich auf die Abtriebswelle 54 verläuft.

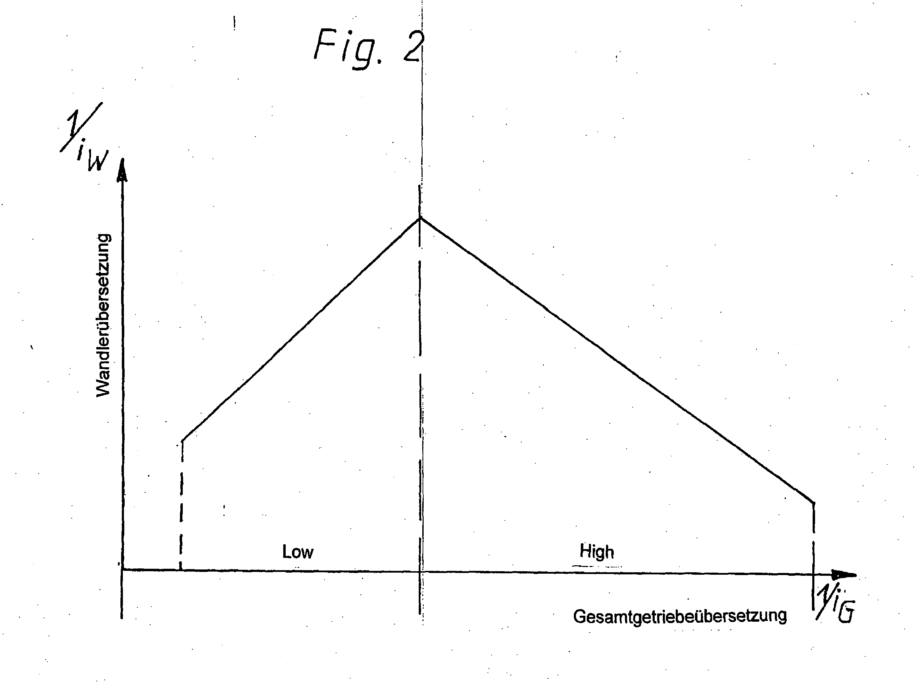

Im unteren Vorwärts-Übersetzungsbereich (= Low - vgl. Fig.2) ist die Lamellenkupplung K2 geöffnet und die Lamellenbremse 58 geschlos sen und es kann der stufenlose Übersetzungsbereich i_{W} des Umschlingungswandlers 18 bei entsprechendem Antriebsfluss durch das Leistungsverzweigungsgetriebe 26 durchfahren werden.

Ist gemäß Fig. 2 der entsprechende Umschaltpunkt (gestrichelte Linie zwischen Low und High) erreicht, so wird im oberen Übersetzungsbe reich (= High) die Lamellenkupplung K2 geschlossen und die Lamellenbremse 58 geöffnet. Nunmehr erfolgt ein direkter Durchtrieb über die Antriebswelle 12 auf den Planetenradträger 42 des ersten Planetenrad satz 28 und zusätzlich durch die Leistungsverzweigungsanordnung im Rücktrieb über das Sonnenrad 40, die Hohlwelle 38, den Zahnradsatz 32, 34, 36 und die Nebenwelle 22 eine Einschaltung des Umschlin gungswandlers 18 in umgekehrtem Übersetzungsmodus, wobei nur ein Teil der Antriebsleistung von dem Umschlingungswandler 18 aufzu nehmen ist.

Andererseits ist es möglich, das Antriebs-Scheibenpaar 16 über eine zur Antriebswelle 12 parallele Welle mit Zahnradvorgelege anzuordnen.

Dabei ist es sinnvoll, die Antriebswelle 12 zwischen den Scheibensät zen 16, 20 und dem Umschlingungsmittel 24 zu platzieren.

Hinsichtlich der Kupplung K2 besteht auch die Möglichkeit, diese im Leistungsverzweigungsgetriebe 26 zwischen den Planetenradsätzen 28, 30 anzuordnen.

## Patentansprüche

1. Geschwindigkeits-Wechselgetriebe (10), insbesondere für Kraftfahrzeuge, mit einer Antriebswelle (12), einer Abtriebswelle (54), einem stufenlosen Wandier (18) und einem Leistungsverzweigungsgetriebe (26), wobei das Leistungsverzweigungsgetriebe (26) dem Wandler (18) nachgeschaltet ist und im Kraftfluss zwischen Wandler (18) und Leistungsverzweigungsgetriebe (26) eine Kupplung (K2) und eine triebliche Verbindung (32, 34, 36) mit einer Hohlwelle (38) eingeschaltet ist und wobei das Leistungsverzweigungsgetriebe (26) durch zwei trieblich miteinander gekoppelte Planetenradsätze (28, 30) gebildet ist, so dass der leistungsverzweigte Betrieb im oberen Übersetzungsbereich möglich ist,
**dadurch gekennzeichnet, dass** die Hohlwelle (38) mit dem Sonnenrad (40) des ersten Planetenradsatzes (28) verbunden ist und dass der Planetenradträger (42) des ersten Planetenradsatzes (28) starr mit dem Außenrad (46) des zweiten Planetenradsatzes (30) verbunden ist und mit einem ersten Bremselement (48) zusammenwirkt.

2. Wechselgetriebe nach Anspruch 1, **dadurch gekennzeichnet, dass** der Planetenradträger (50) des zweiten Planetenradsatzes (30) mit dem Außenrad (52) des ersten Planetenradsatzes (28) starr verbunden ist und unmittelbar auf die Abtriebswelle (54) wirkt.

3. Wechselgetriebe nach Anspruch 1 oder Anspruch 2,
**dadurch gekennzeichnet, dass** das Sonnenrad (56) des zwei ten Planetenradsatzes (30) auf der Abtriebswelle (54) drehbar gelagert ist und mit einem zweiten Bremselement (58) zusammenwirkt.

4. Wechselgetriebe nach einem der Ansprüche 1 bis 3,
**dadurch gekennzeichnet, dass** beide Planetenradsätze (28, 30) mit gleicher Verzahnung ausgebildet sind.

5. Wechselgetriebe nach Anspruch 3,
**dadurch gekennzeichnet, dass** die Bremselemente mit dem Getriebegehäuse verbindbare Lamellenbremsen (48, 58) sind.

6. Wechselgetriebe nach Anspruch 5,
**dadurch gekennzeichnet, dass** die Lamellenbremsen (48, 58) als Anfahrkupplung ausgebildet sind, so dass die Anfahrkupplung (AK) zwischen einem Zweimassenschwungsrad (14) und dem Wandler (18) entfallen kann.

7. Wechselgetriebe nach einem der Ansprüche 1 bis 6,
**dadurch gekennzeichnet, dass** der stufenlose Wandler ein Umschlingungswandler mit einem Antriebsscheibenpaar und einem Abtriebsscheibenpaar ist, wobei das Antriebsscheibenpaar (16) koaxial zur Antriebswelle (12) angeordnet ist.

8. Wechselgetriebe nach einem der Ansprüche 1 bis 6,
**dadurch gekennzeichnet, dass** der stufenlose Wandler ein Umschlingungswandler mit einem Antriebsscheibenpaar und einem Abtriebsscheibenpaar ist, wobei das Antriebsscheibenpaar (16) auf einer zur Antriebswelle (12) parallelen Welle angeordnet ist.

9. Wechselgetriebe nach Anspruch 8, **dadurch gekennzeichnet, dass** die Antriebswelle (12) zwischen den Scheibensätzen (16, 20) und deren Umschlingungsmittel (24) platziert ist.

10. Wechselgetriebe nach einem oder mehreren der vorhergehenden Ansprüche, **dadurch gekennzeichnet, dass** dem Leistungsverzweigungsgetriebe (26) ein Längsdifferenzial (64) für den Antrieb einer Vorderachse (70) und einer Hinterachse des Kraftfahrzeuges nachgeschaltet ist.

11. Wechselgetriebe nach Anspruch 10, **dadurch gekennzeichnet, dass** das Längsdifferenzial (64) über ein Vorgelege (60, 62) von der Abtriebswelle (54) angetrieben ist und dass die eine Achs-Antriebswelle (66) durch das eine Zahnrad (62) des Vorgeleges hindurch verläuft.

12. Wechselgetriebe nach Anspruch 11, **dadurch gekennzeichnet, dass** die besagte Achs-Antriebswelle (66) über ein weiteres Vor gelege (72, 74) mit einer Antriebswelle (76) der Vorderachse (70) trieblich verbunden ist.

13. Wechselgetriebe nach einem oder mehreren der vorhergehen den Ansprüche, **dadurch gekennzeichnet, dass** der stufenlose Wandler ein Umschlingungswandler (18) ist, dessen Scheiben sätze (16, 20) auf der Antriebswelle (12) und einer dazu achspa rallelen Nebenwelle (22) angeordnet sind und dass die Neben welle (22) andererseits ein weiteres Zahnrad (36) eines Zahnrad triebes (32, 34, 36) trägt.

14. Wechselgetriebe nach einem oder mehreren der vorhergehen den Ansprüche, **dadurch gekennzeichnet, dass** der stufenlose Wandler ein Umschlingungswandler (18) ist, dessen Scheiben sätze (16, 20) auf einer zur Antriebswelle achsparallelen Welle und einer dazu achsparallelen Nebenwelle (22) angeordnet sind und dass die Nebenwelle (22) andererseits ein weiteres Zahnrad (36) eines Zahnradtriebes (32, 36) trägt.

## Claims

1. Speed change transmission (10), in particular for motor vehicles, with a drive shaft (12), with an output shaft (54), with a continuous converter (18) and with a power split transmission (26), the power split transmission (26) following the converter (18), and a clutch (K2) and a drive connection (32, 34, 36) to a hollow shaft (38) being inserted in the force flux between the converter (18) and power split transmission (26), and the power split transmission (26) being formed by two planet-wheel sets (28, 30) drive-coupled to one another, so that power-split operation is possible in the upper step-up range, **characterized in that** the hollow shaft (38) is connected to the sun wheel (40) of the first planet-wheel set (28), and **in that** the planet-wheel carrier (42) of the first planet-wheel set (28) is connected rigidly to the outer wheel (46) of the second planet-wheel set (30) and cooperates with a first braking element (48).

2. Change transmission according to Claim 1, **characterized in that** the planet-wheel carrier (50) of the second planet-wheel set (30) is rigidly connected to the outer wheel (52) of the first planet-wheel set (28) and acts directly upon the output shaft (54).

3. Change transmission according to Claim 1 or Claim 2, **characterized in that** the sun wheel (56) of the second planet-wheel set (30) is mounted rotatably on the output shaft (54) and cooperates with a second braking element (58).

4. Change transmission according to one of Claims 1 to 3, **characterized in that** the two planet-wheel sets (28, 30) are designed with identical toothing.

5. Change transmission according to Claim 3, **characterized in that** the braking elements are multiple-disc brakes (48, 58) connectable to the transmission case.

6. Change transmission according to Claim 5, **characterized in that** the multiple-disc brakes (48, 58) are designed as a starting clutch, so that the starting clutch (AK) between a two-mass flywheel (14) and the converter (18) can be dispensed with.

7. Change transmission according to one of Claims 1 to 6, **characterized in that** the continuous converter is a wrap-around converter with a pair of drive pulleys and with a pair of output pulleys, the pair of drive pulleys (16) being arranged coaxially with respect to the drive shaft (12).

8. Change transmission according to one of Claims 1 to 6, **characterized in that** the continuous converter is a wrap-around converter with a pair of drive pulleys and with a pair of output pulleys, the pair of drive pulleys (16) being arranged on a shaft parallel to the drive shaft (12).

9. Change transmission according to Claim 8, **characterized in that** the drive shaft (12) is placed between the pulley sets (16, 20) and their wrap-around means (24).

10. Change transmission according to one or more of the preceding claims, **characterized in that** the power split transmission (26) is followed by a longitudinal differential (64) for the drive of a front axle (70) and of a rear axle of the motor vehicle.

11. Change transmission according to Claim 10, **characterized in that** the longitudinal differential (64) is driven by the output shaft (54) via a countershaft (60, 62), and **in that** one axle drive shaft (66) runs through one gearwheel (62) of the countershaft.

12. Change transmission according to Claim 11, **characterized in that** the said axle drive shaft (66) is drive-connected to a drive shaft (76) of the front axle (70) via a further countershaft (72, 74).

13. Change transmission according to one or more of the preceding claims, **characterized in that** the continuous converter is a wrap-around converter (18), the pulley sets (16, 20) of which are arranged on the drive shaft (12) and on a secondary shaft (22) axially parallel thereto, and **in that** the secondary shaft (22) carries, on the other hand, a further gearwheel (36) of a gearwheel drive (32, 34, 36).

14. Change transmission according to one or more of the preceding claims, **characterized in that** the continuous converter is a wrap-around converter (18), the pulley sets (16, 20) of which are arranged on a shaft axially parallel to the drive shaft and on a secondary shaft (22) axially parallel thereto, and **in that** the secondary shaft (22) carries, on the other hand, a further gearwheel (36) of a gearwheel drive (32, 36).

## Revendications

1. Boîte de vitesses (10), notamment pour véhicules automobiles, comprenant un arbre d'entraînement (12), un arbre de sortie (54), un convertisseur continu (18) et une transmission à répartition de puissance (26), la transmission à répartition de puissance (26) étant montée après le convertisseur (18) et dans le flux de forces entre le convertisseur (18) et la transmission à répartition de puissance (26), un embrayage (K2) et une connexion par entraînement (32, 34, 36) avec un arbre creux (38) étant montés, et la transmission à répartition de puissance (26) étant formée par deux trains planétaires (28, 30) accouplés l'un à l'autre par entraînement, de sorte que le fonctionnement à répartition de puissance soit possible dans la plage de multiplication supérieure,
**caractérisée en ce que** l'arbre creux (38) est connecté à la roue solaire (40) du premier train planétaire (28) et **en ce que** le porte-satellites (42) du premier train planétaire (28) est connecté rigidement à la roue externe (46) du deuxième train planétaire (30) et coopère avec un premier élément de frein (48).

2. Boîte de vitesses selon la revendication 1, **caractérisée en ce que** le porte-satellites (50) du deuxième train planétaire (30) est connecté rigidement à la roue externe (52) du premier train planétaire (28) et agit directement sur l'arbre de sortie (54).

3. Boîte de vitesses selon la revendication 1 ou 2,
**caractérisée en ce que** la roue solaire (56) du deuxième train planétaire (30) est montée à rotation sur l'arbre de sortie (54) et coopère avec un deuxième élément de frein (58).

4. Boîte de vitesses selon l'une quelconque des revendications 1 à 3,
**caractérisée en ce que** les deux trains planétaires (28, 30) sont réalisés avec la même denture.

5. Boîte de vitesses selon la revendication 3,
**caractérisée en ce que** les éléments de frein sont des freins à lamelles (48, 58) pouvant être connectés au carter de la boîte de vitesses.

6. Boîte de vitesses selon la revendication 5,
**caractérisée en ce que** les freins à lamelles (48, 58) sont réalisés sous forme d'embrayage de démarrage, de sorte que l'embrayage de démarrage (AK) entre une roue volante à deux masses (14) et le convertisseur (18) puisse être omis.

7. Boîte de vitesses selon l'une quelconque des revendications 1 à 6,
**caractérisée en ce que** le convertisseur continu est un convertisseur à courroie avec une paire de disques d'entraînement et une paire de disques de sortie, la paire de disques d'entraînement (16) étant disposée coaxialement à l'arbre d'entraînement (12).

8. Boîte de vitesses selon l'une quelconque des revendications 1 à 6, **caractérisée en ce que** le convertisseur continu est un convertisseur à courroie avec une paire de disques d'entraînement et une paire de disques de sortie, la paire de disques d'entraînement (16) étant disposée sur un arbre parallèle à l'arbre d'entraînement (12).

9. Boîte de vitesses selon la revendication 8, **caractérisée en ce que** l'arbre d'entraînement (12) est placé entre les jeux de disques (16, 20) et leur moyen de courroie (24).

10. Boîte de vitesses selon l'une quelconque ou plusieurs des revendications précédentes, **caractérisée en ce que** la transmission à répartition de puissance (26) est suivie d'un différentiel longitudinal (64) pour l'entraînement d'un essieu avant (70) et d'un essieu arrière du véhicule automobile.

11. Boîte de vitesses selon la revendication 10, **caractérisée en ce que** le différentiel longitudinal (64) est entraîné par le biais d'une transmission intermédiaire (60, 62) par l'arbre de sortie (54), et **en ce que** l'arbre d'entraînement d'essieu (66) s'étend à travers la roue dentée (62) de la transmission intermédiaire.

12. Boîte de vitesses selon la revendication 11, **caractérisée en ce que** ledit arbre d'entraînement d'essieu (66) est connecté par entraînement par le biais d'une autre transmission intermédiaire (72, 74) à un arbre d'entraînement (76) de l'essieu avant (70).

13. Boîte de vitesses selon l'une quelconque ou plusieurs des revendications précédentes, **caractérisée en ce que** le convertisseur continu est un convertisseur à courroie (18), dont les jeux de disques (16, 20) sont disposés sur l'arbre d'entraînement (12) et un arbre auxiliaire (22) d'axe parallèle à celui-ci, et **en ce que** l'arbre auxiliaire (22) porte d'autre part une autre roue dentée (36) d'un entraînement à roue dentée (32, 34, 36).

14. Boîte de vitesses selon l'une quelconque ou plusieurs des revendications précédentes, **caractérisée en ce que** le convertisseur continu est un convertisseur à courroie (18) dont les jeux de disques (16, 20) sont disposés sur un arbre d'axe parallèle à l'arbre d'entraînement et un arbre auxiliaire (22) d'axe parallèle à celui-ci, et **en ce que** l'arbre auxiliaire (22) porte d'autre part une autre roue dentée (36) d'un entraînement à roue dentée (32, 36).
